# EUROPEAN PATENT SPECIFICATION

(11) **EP 0 662 910 B1**
(45) Date of publication and mention of the grant of the patent: **02.12.1998**
(21) Application number: 93921869.9
(22) Date of filing: 28.09.1993
(51) Int. Cl.: B65D 1/02, B29C 49/00

(54) **Method and apparatus for the manufacture of a container made from thermoformable and heat sealable material**
Verfahren und Vorrichtung zur Herstellung eines Behälters aus wärmeverformbaren und -verschweissbaren Material
Procédé et appareil pour la fabrication d'un récipient en matériau thermoformable et thermosoudable

(30) Priority: 08.10.1992 IT BO920347; 30.10.1992 IT BO920385; 26.07.1993 IT BO920331
(43) Date of publication of application: 19.07.1995
(60) Divisional application: 98102609.9
(73) Proprietor: UNIFILL INTERNATIONAL A/G, 8280 Kreuzlingen (CH)
(72) Inventor: TABARONI, Roberto, I-40129 Bologna (IT); BARTOLI, Andrea, I-42100 Reggio Emilia (IT); BULGARELLI, Claudio, I-41100 Modena (IT)
(74) Representative: Luppi, Luigi
(86) International application number: EP9302639
(87) International publication number: WO9408852

(56) References cited:
- EP-A- 0 479 152
- BE-A- 556 274
- CH-A- 495 888
- DE-A- 2 120 080
- DE-A- 2 714 917
- DE-B- 1 189 258
- FR-A- 1 199 371
- FR-A- 1 203 209
- FR-A- 1 265 926
- US-A- 3 380 608
- US-A- 3 423 902
- MODERN PACKAGING vol. 8, no. 33 , 1960 page 84 'Bottlefrom palstic sheet'

## Description

The invention concerns a container in thermoformable and heat sealable material, including a hollow casing made up of a pair of halves having opposing concavities, joined together by heat sealing along the edge in correspondence with an essentially median longitudinal plane, the heat sealing creating-a stiffening rib on the outside of the container.

The prior art involves IT-A-1163817, US-A-2991500, US-A-3782066, EP-A-0378027, but particularly FR-A-1199371 and EP-A-0479152, concerning manufactuting methods for containers made of plastic material and corresponding production plants.

FR-A-1199371 discloses a blow-moulding method in which two webs of thermoplastic material step through, intern, a heating station at which opposite zones of the respective webs are heated, a welding station at which those zones are welded together around a profile in the form of an open loop, a forming station at which the web parts within the profile are formed into shells by inflation applied between the parts, or by suction applied outside the parts, or by both that inflation and that suction, a filling station at which product is filled into the hollow space between the shells, a closing station at which a neck though which the fillng has taken place is sealingly closed, and a sevelling station at which the filled and filled container is cut out from the webs.

EP-A-0479152 discloses a similar method, except that the first station is an outline-welding station and is followed by an heating station, an inflation station, a filling station, and a closing station, whereby groups of filled and closed cells are obtained.

The latter two methods are disadvantageous for producing containers for which relatively large deformations of the webs are required, since the greater the deformation necessary, the longer the time spent in the forming station, otherwise the quality of container produced is reduced.

The present invention is characterised by the features of the independent claims.

The dependent claims relate to preferred embodiment of the method and the apparatus according to the independent claims.

Owing to the invention, good quality containers requiring relatively large deformation of the starting sheets can be obtained at relatively high speed, because the inflation is in first and second stages. Furthermore, supply of the inflating fluid to the conduits between the facing parts can pre-heat the fluid to temperatures which do not shock the thermoformable material in the second inflation station.

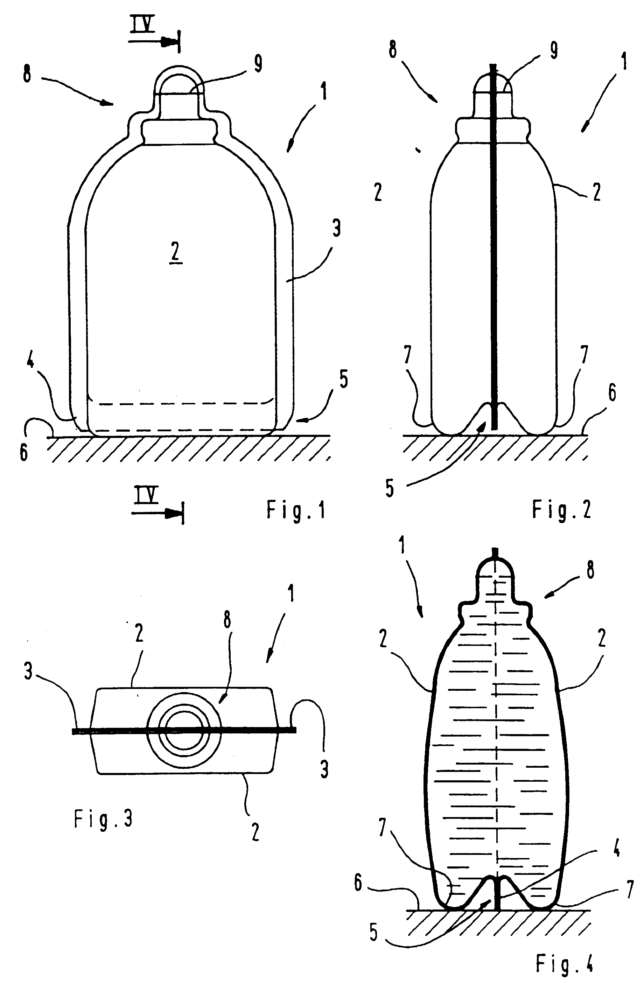

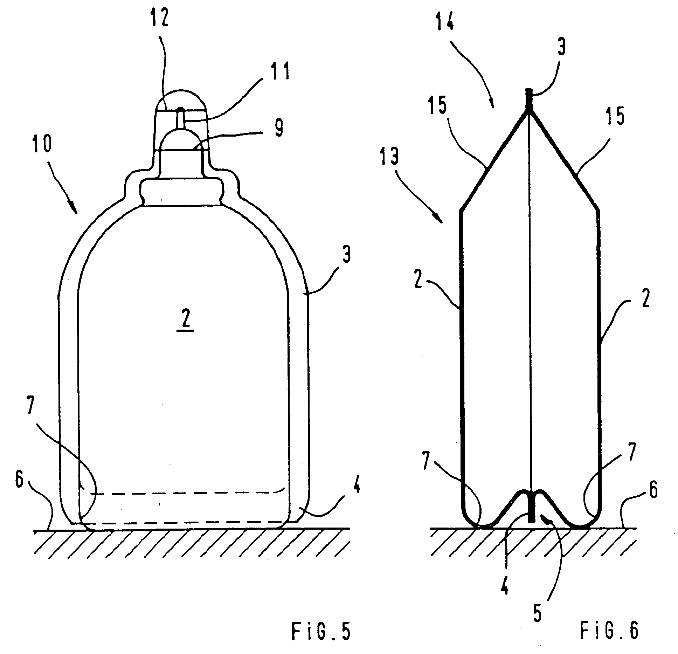

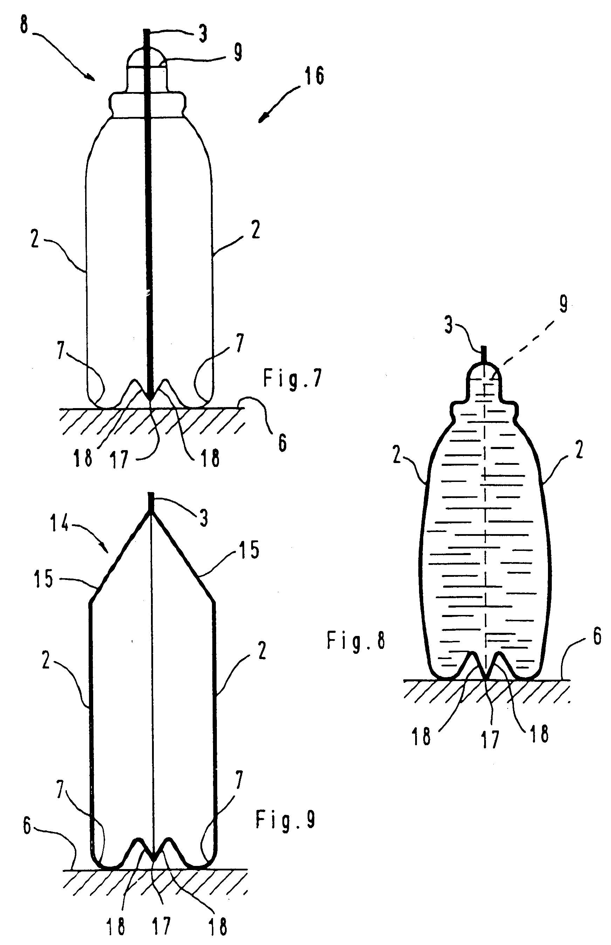

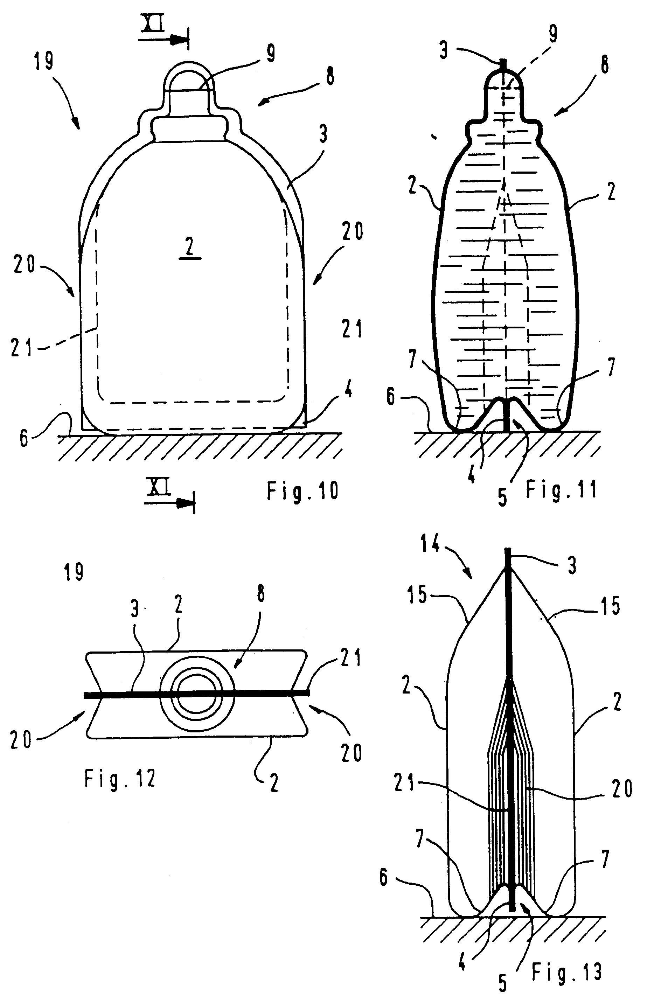

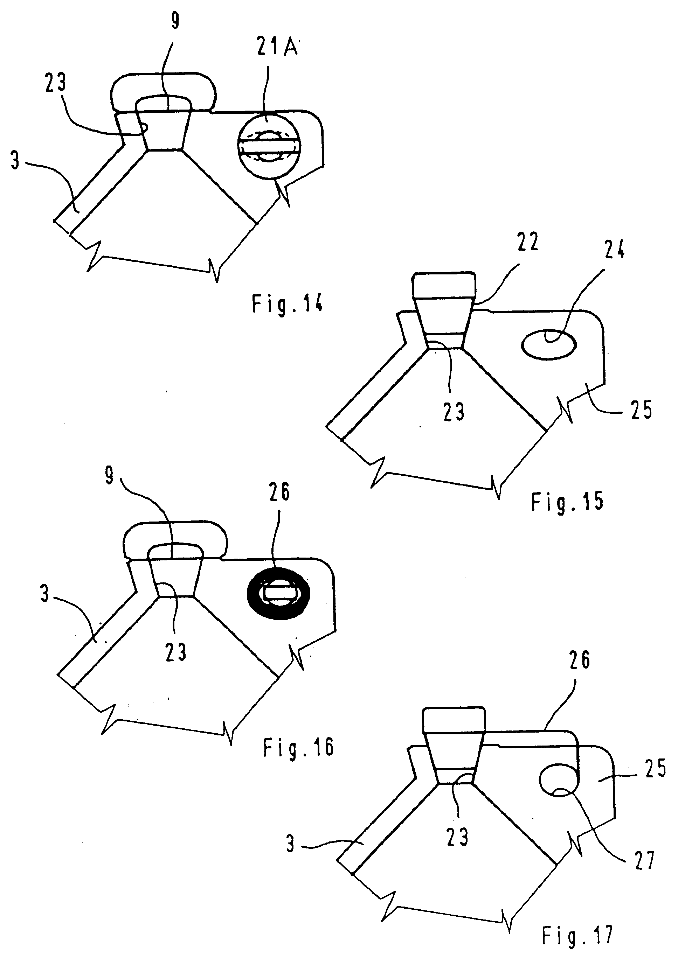

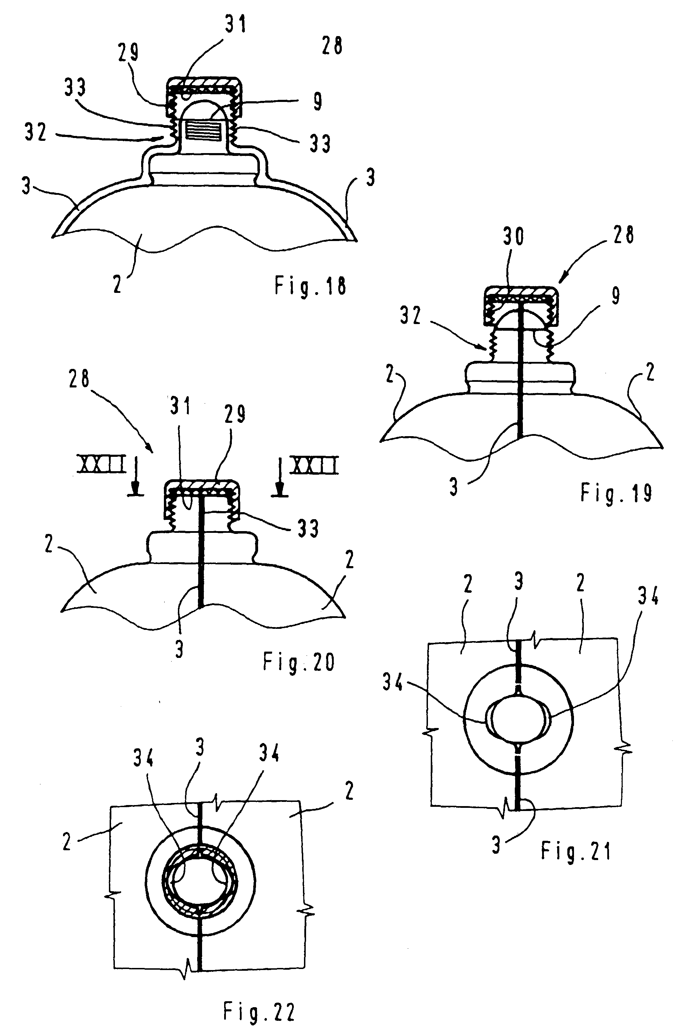

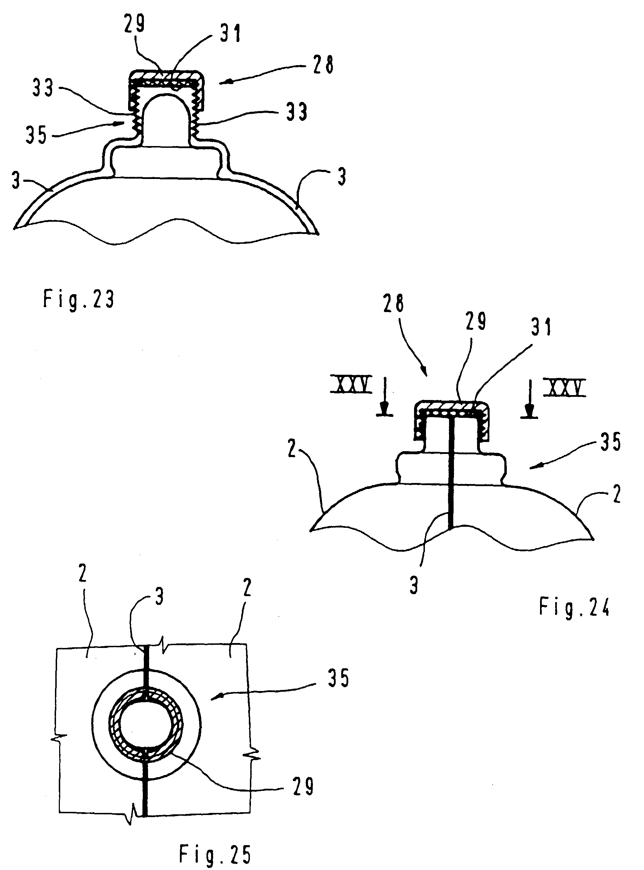

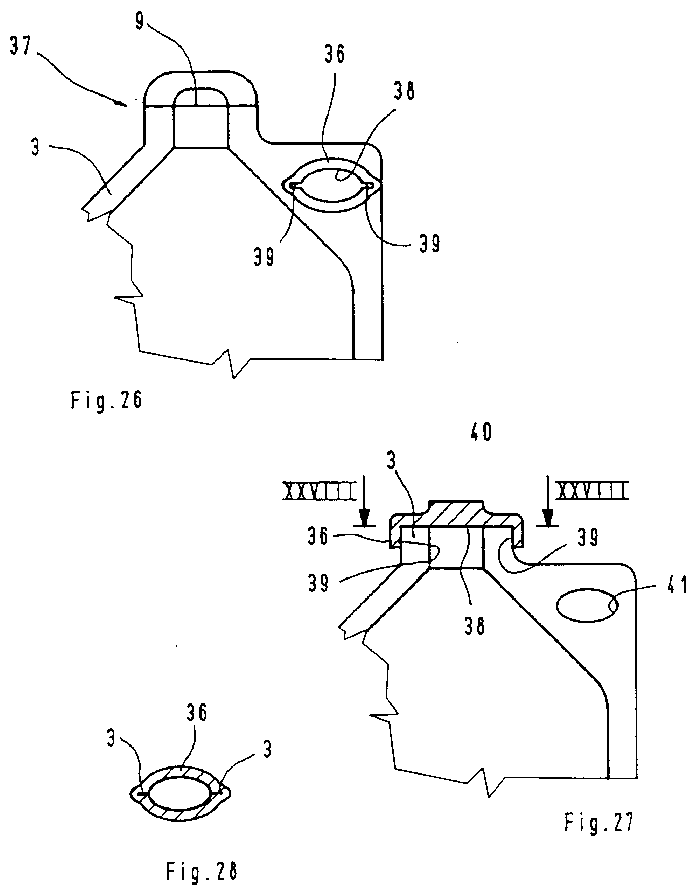

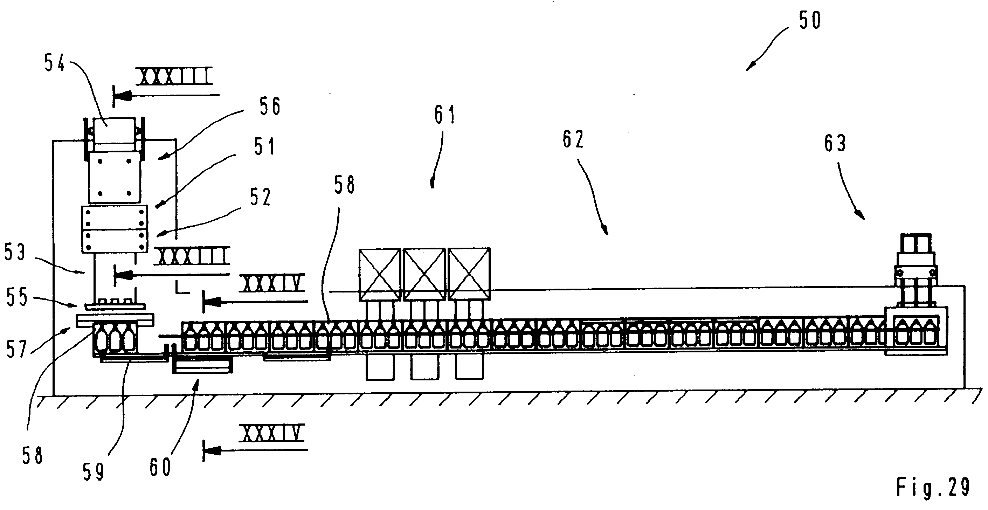

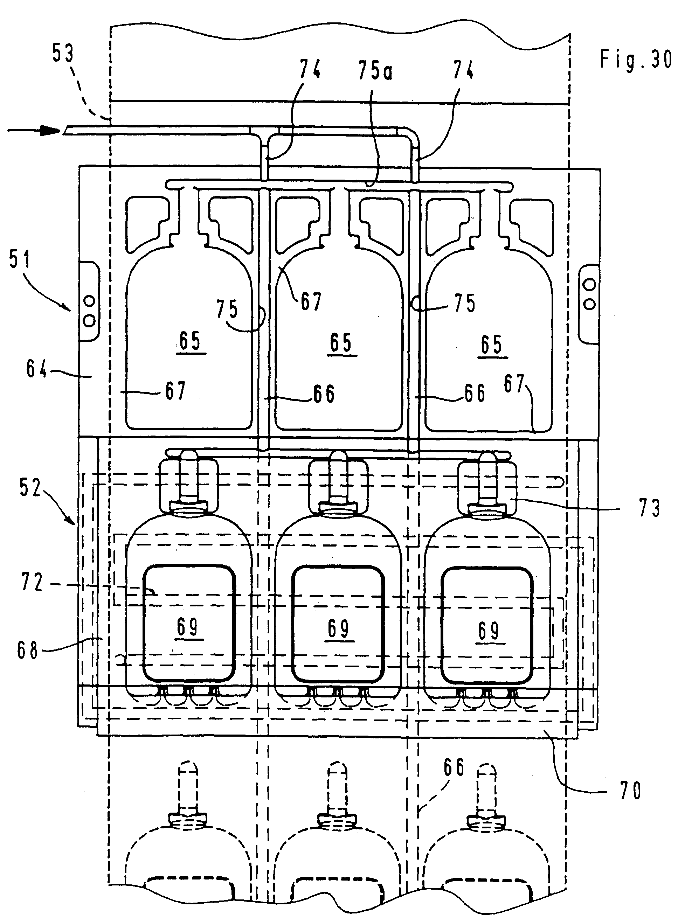

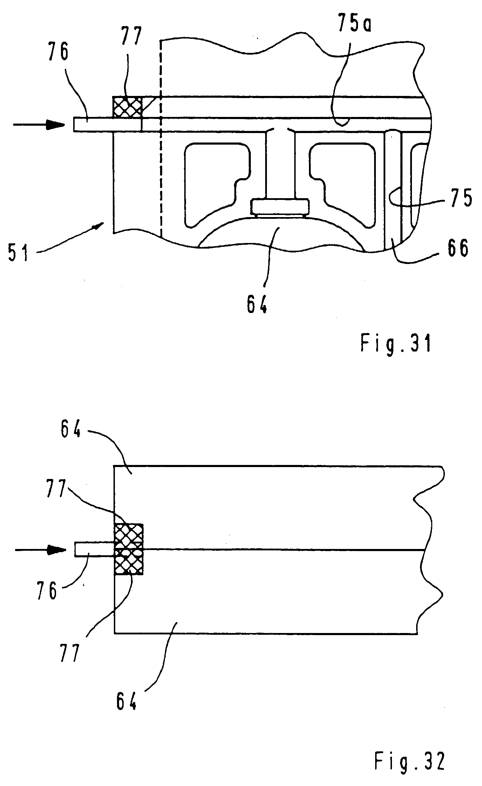

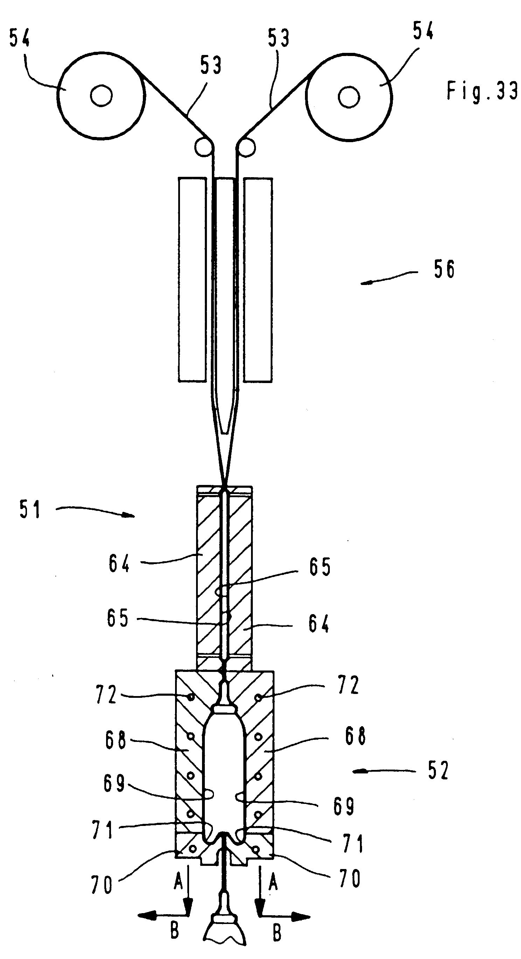

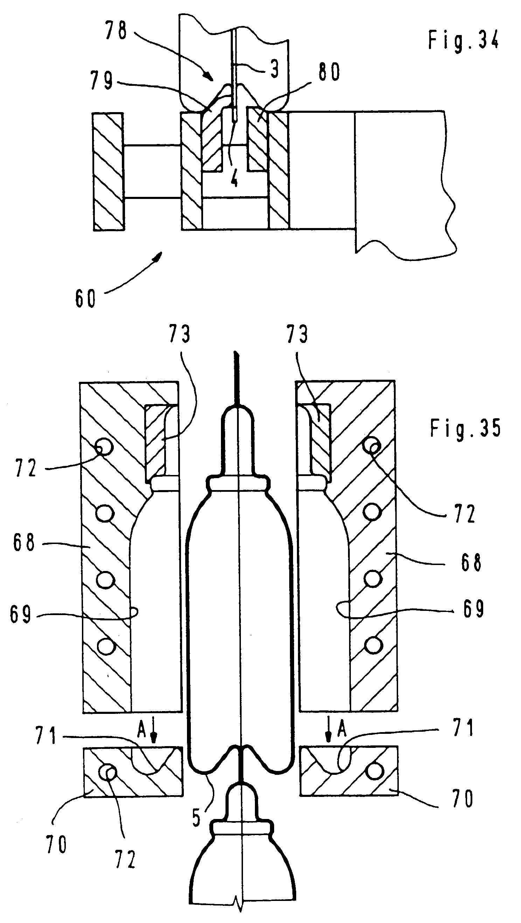

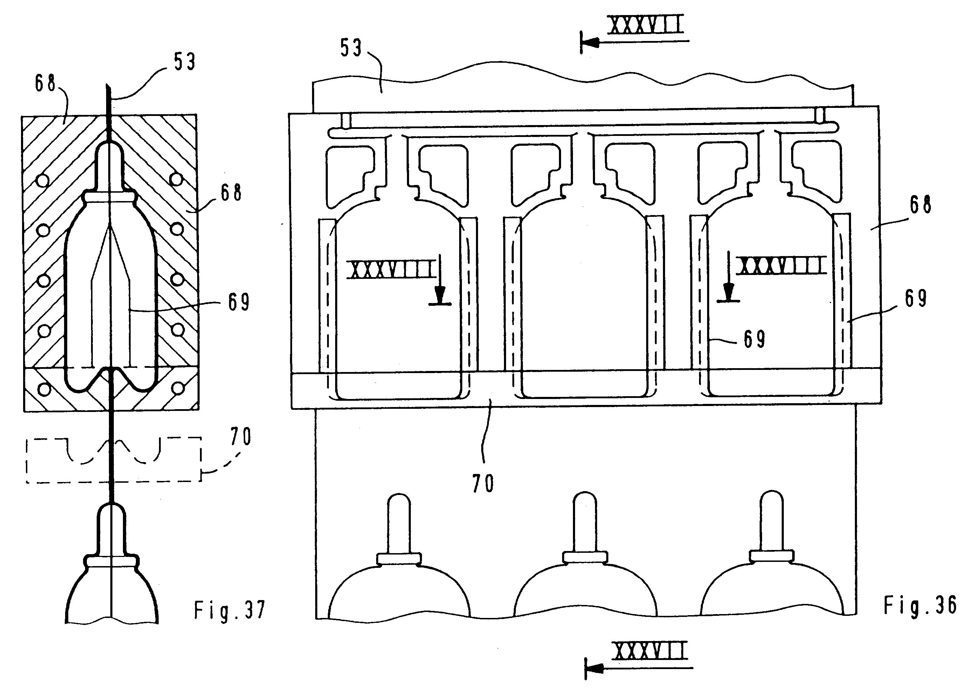

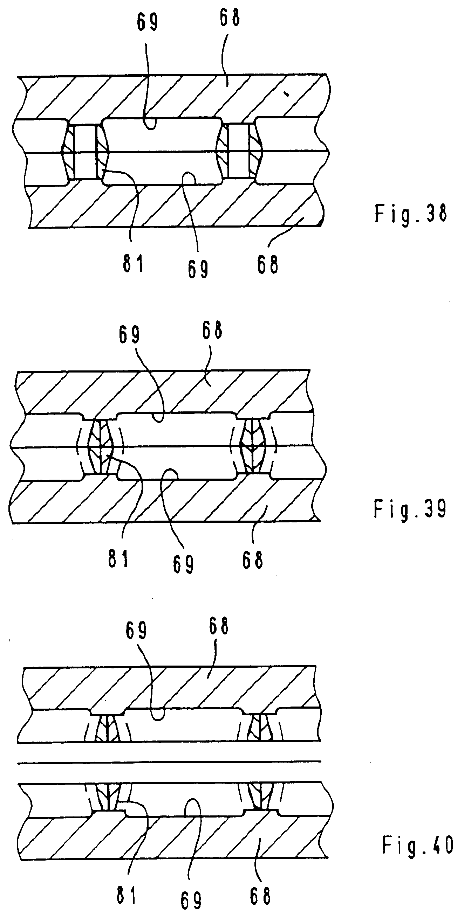

Some embodiments of the invention are illustrated, purely by way of example, in the drawing attached, in which: Figure 1 is a front view of a container; Figure 2 is a view from the left of Figure 1; Figure 3 is a top view of Figure 1; Figure 4 is section IV-IV of Figure 1 of a full container showing the casing deformed by the weight of the product in a self-levelling configuration; Figure 5 is a view as in Figure 1 of a second version of the container having a neck with two diameters; Figure 6 is a section as in Figure 4 of a third version of an empty container having a neck with straight sloping sides; Figure 7 is a view as in Figure 2 of a fourth version of the container obtained with the folding of a single sheet; Figure 8 is a section as in Figure 4 of the version of container as in Figure 7; Figure 9 is a section as in Figure 6 of a fifth version of a container obtained with the folding of a single sheet which has a neck with straight sloping sides; Figure 10 is a view as in Figure 1 of a sixth version of a container having base and sides with indentations for the heat sealing; Figure 11 is section IX-IX of Figure 10 of a full container; Figure 12 is a top view of Figure 10; Figure 13 is a side view of a container as in Figure 10 showing a seventh version with straight sloping sides; Figure 14 is a partial, enlarged frontal view of a first plug for any one of the containers as in Figures 1 to 13, relating to a container in an as yet unopened configuration; Figure 15 is a section along the median longitudinal plane of the container of Figure 14 showing the configuration with the plug in place after the container has been opened along a predetermined fracture line; Figure 16 is a view as in Figure 14 of a second version of the plug; Figure 17 is a section as in Figure 15 showing the version of plug as in Figure 16; Figure 18 is a side view as in Figure 14 showing a third version with sectioned screw cap and with the container as yet unopened; Figure 19 is a side view of Figure 18; Figure 20 is a view as in Figure 19 with the container in opened configuration and with the cap in place; Figure 21 is a top view of Figure 20 without the cap; Figure 22 is section XXII-XXII of Figure 20; Figure 23 is a view as in Figure 18 showing a fourth version of screw cap; Figure 24 is a view as in Figure 20 showing the fourth version of cap; Figure 25 is the transverse section' XXV-XXV of Figure 24; Figure 26 is a view as in Figure 14 showing a fifth version of cap which fits around the external surface of the neck of the container; Figure 27 is a section as in Figure 15 showing the container of Figure 26; Figure 28 is section XXVIII-XXVIII of Figure 27; Figure 29 is a schematic elevated view of a plant for the forming of the containers to implement the method as described; Figure 30 is a partial, interrupted and enlarged view of a first variant of a forming station with air insufflation in a direction parallel to the direction of advancement of the sheets of heat sealable and thermoformable material; Figure 31 is an enlarged detail of the air supply for the forming, moreover in a variant with air insufflation in a direction which is perpendicular to the direction of advancement of the sheets of heat sealable and thermoformable material; Figure 32 is a top view of Figure 31; Figure 33 is section XXXIII-XXXIII of Figure 29; Figure 34 is section XXXIV-XXXIV of Figure 29; Figure 35 is an enlarged detail of the forming die as of Figure 33 in open position showing the removable components for the formation of the underside indentations of the containers; Figure 36 is a front view of the forming die, moreover with a variant having lateral inserts for the formation of the side indentations of the containers; Figure 37 is section XXXVII-XXXVII of Figure 36; Figure 38 is section XXXVIII-XXXVIII of Figure 36 in the configuration during forming; Figure 39 is a section as in Figure 38, showing the configuration with inserts retracted for ejection, with the outline of the transverse section of the container shown in a dotted line; Figure 40 is a section as in Figure 39, in the configuration with the die opened.

The container, or flask, or bottle, 1 as in the first version consists of a pair of symmetrical halves 2, obtained by pneumatic thermoformation of a pair of sheets of heat sealable material in accordance with a method that will be described later; the halves have opposing concavities and are joined along their edge by means of a heat seal 3 projecting outward from the cavity of the container and constituting a stiffening rib along the median longitudinal plane. The portion 4 of the heat seal 3 around the base of the container 1 being located in an indentation 5 defined by a pair of portions 7 of the halves 2 having essentially U-shaped sections; the portions 7 of the halves 2 defining a pair of horizontally disposed bulges.

The lower edge of the portion 4 of heat seal not interfering with the supporting surface 6: in particular the said edge not touching the surface, at least in the condition of the container being empty, whereas the said edge may come into contact with the surface when the container is full, as illustrated in Figure 4.

The neck of the container 1 can be of any form, being, for example, of cylindrical shape 8, even with more than one diameter, and can have at least one predetermined first fracture line to facilitate opening.

Figure 5 illustrates a container 10 as per second version, being essentially correspondent to the container 1 as per first version, but having a neck with an extension 11 on the upper side, essentially cylindrical or oval, in at least one part being of reduced diameter, on it there being a second predetermined fracture line: the internal diameter of the said extension being such as to permit the discharge of the product drop by drop, or even in a continuous stream by exerting gentle pressure on the valves 2; the section of the said extension however being sufficiently small not to allow free discharge of the product when the container is lying on its side or is upside down.

In Figure 6 a container 13 is represented as per third version having a neck 14 consisting of a pair of straight sides sloping downwards, at the top being joined with the top portion of the heat seal 3.

In Figure 7 a container is represented as per fourth version being obtained by the folding of a single sheet along the median line 17 of the base: the U-shaped sections 7 of the valve 2 both having attachments 18 converging downwards towards the longitudinal centre-line plane of the container to enable it to be joined with the corresponding attachment of the halve 2 on the opposite side of the median folding line 17.

Figure 10 shows a container 19 as per sixth variation which, as well as having indentations 5 on its underside to contain the lower portion of heat seal 3, also has indented sides 20 to contain the lateral portions 21 of the heat seal 3: the said heat seal extends beyond the profile of the container only in its upper-middle portions.

The lower portion of each indented side 20 of container 19 is joined to the indented underside 5 of the container in such a way as to form a single indentation in the form of "U" inside which is contained a considerable portion of the heat seal 3.

The plug 21A as per first version (Figures 14 and 15) has a lateral surface which is designed to make contact with and seal against the internal surface 23 of the neck of the container: in a particularly frequent case both such surfaces are truncated cones in shape with oval base; with the container in its sealed configuration, the plug 21A is located with press fit in a hole 24 located in an area 25 of the heat seal 3, it being made wider for that purpose; it is to be noted that the plug 21A can be a separate component, or integral with the container, removable from it along a predetermined fracture line, as in a version not shown.

The plug as per second version (Figures 16 and 17) is analogous to the plug as per first version, but is connected to the area 25 of the heat seal 3 by means of a cord 26 wound in a spiral around the plug 21 with the container in its sealed configuration.

In this version the plug is always integral with the container and fixed in a stable manner to the container itself; the cord being achieved by sequential punching, or incision, in a spiral in the area 25 with a continuous or dashed profile; the unravelling of the spiral determining the formation of a hole 27 in area 25 analogous to hole 24 described previously.

The screw cap 28 as per third version (Figures 18-22) is made up of a cylindrical hollow body 29, having on its inside a screw thread and a seal disc 31 made of soft material and inserted in the bottom of the cavity of the body 29 and designed to provide a liquid-proof seal against the top rim of the neck 32 of the container once it has been opened along the predetermined fracture line 9.

The external surface of the neck 32 has two saw-tooth portions in the heat seal 3 designed to interact with the thread 30 in the body 29 of the cap; the neck 32 also has, in the area without the heat seal 3, a pair of bulges 34 that define an interrupted thread which are also designed to interact with the internal thread 30 of the body 29.

The cap as per fourth version (Figures 23, 24, 25) is analogous to the screw cap 28, but the neck 35 of the corresponding container only has the saw-tooth profile 33 in the heat seal 3, and the remaining extent of its surface is essentially smooth and cylindrical and functions as centering for the hollow body 29 when winding the thread 30 on the saw-tooth profile 33.

The cap as per fifth version (Figures 26, 27, 28) is made up of an internally hollow cover 36 that fits around the external surface of the neck 37 of the container when it has been opened along the predetermined fracture line 9; the internal surface of the cavity 38 of the cover has a pair of incisions 39 opposite each other intended to fit around the upper extremities of the heat seal 3; the external upper surface of the cover can have a shank designed to press-fit in hole 41 to hold the cap when the container is still sealed.

The plant 50 (Figure 29) to implement the method as described consists essentially of a station 51 to heat seal the edges of the containers upstream of a station 52 for the pneumatic forming of the containers themselves; a pair of sheets of heat sealable and thermoformable material is made to advance in steps through the said stations, for example wound off rolls 54, activated by a hauling mechanism 55, for example with pincers having alternating motion.

Upstream of the heat sealing station 51 there is a pre-heating station 56, whereas downstream of the hauling mechanism 55 there is a station 57 to cut a transverse row 58 of formed containers, inserted in a conveyer and transferred to a trimming station 60 to cut the lower portion 4 of the heat seal 3 and subsequently on to a filling station 61, a sealing station 62, and to a blanking station 63 to cut out the containers of a single row and to extract themfor packaging.

The heat sealing station 51 (Figure 30) is made up of a pair of die-halves 64 heated to a sealing temperature, depending on the nature of the material being used, each of the two die-halves having at least one impression 65 corresponding to the shape of the container and at least one longitudinal through-groove 66 that is made communicating with the said at least one impression: the edges of the said at least one groove and the said at least one impression have sealing surfaces 67 to perform the heat sealing 3.

The pneumatic forming station 52 is also made up of two die-halves 68 having at least one impression 69 corresponding to the said at least one impression 65 of the heat sealing station 51, only deeper to give the container its definitive shape.

The part of each die-half 68 intended for the forming of the base of the container has a removable component 70 for the ejection of the products at the end of the pneumatic forming: the said removable component having internal surface 71 (Figure 33) corresponding to the U-shaped portions 7 of the undercut bottom indentations 5 of the container: the actuation of each removable component 70 occurring in the directions of the arrows A, B, the last one occurring simultaneously with the opening of the two die-halves 68.

The die-halves 68 and the removable components 70 being cooled by means of liquid circulating in appropriate channels 72.

The die-halves 68 also have removable inserts 73 (Figure 35) suitable for the forming of the neck of the container, for example, for the formation of the threaded portions 34.

Upstream of the heat sealing station 51 there are pressurized air injectors 74 for the forming of the containers made communicating with the longitudinal channels 75 obtained by means of the grooves 66 of the die-halves 64: the longitudinal channels 75 being connected by means of transverse channels 75a inside the containers in the areas concerning the cavities of the die-halves 64, 68.

Alternatively, though less advantageously, the die-halves 64 have lateral injectors 76 (.Figures 31, 32): in such cases that part of the die which is upstream of the injector should not be sealing, having, to that end, removable components made of heat-resistant material to enable the advancement of the sheets 53 by steps.

The trimming station 60 (Figure 34) to cut the lower portion 4 of the heat seal 3 is made up of a pincer cutting mechanism 78 having fixed matrix 79 and shearing blade 80, made mobile with alternating motion in relation to the said matrix.

The die-halves 68 can have lateral inserts 81 (figure 37) shaped in such a way as to form the lateral indentations 20 of the sides of the container: the said inserts being prevalently longitudinal in extension, are made to shuttle in a transverse direction, by means not shown, from a position that penetrates the sides of the container (Figure 38) during its forming, to a position distant from them (Figures 39, 40) for the ejection of the container.

The method of forming as described, carried out with the plant as in Figures 29 to 40, is as follows:
- pre-heating of the sheets of thermoformable and heat sealable material;
- heat sealing of the edges of the containers, with simultaneous insufflation of air to prevent the sealing of the central area of the sheets destined to forming the walls of the container, and simultaneous forming by heat sealing of a number of conduits for the pneumatic forming communicating with each other and with the containers;
- thermoforming of the containers by insufflation of pressurized air in the said forming conduits by means of injectors located upstream of the heat sealing station and aligned in a direction parallel to the direction of advancement of the sheets.

Furthermore it is to be noted that the thermoforming of the containers can also be carried out using the product with which they are to be filled, instead of using air. It is to be noted that the longitudinal conduits 75 of the heat sealing station 51, once they have advanced one step as determined by the hauling mechanism 55, and have reached the thermoforming station 52, they are flattened by the plane surfaces of the die-halves 68 that do not have grooves corresponding to the grooves 66 beneath the transverse conduits 75a: in this way, injection of the forming fluid through the injectors 74 pressurizes the areas delimited by the heat seals in station 51 as well as in the forming station 52.

Note that the passage of air through the heat sealing station causes it to heat up, improving the quality of the forming; furthermore, forming with hot air allows for improved hygiene conditions to be attained during the forming process, which is particularly advantageous in alimentary and pharmaceutical applications.

Furthermore, in the case of bottles, on-site filling, ie. in the vicinity of the forming plant, permits a considerable saving in space that would otherwise be required to stock the empty containers and in the associated transport costs.

In practice, the materials, dimensions and details of execution may be different from but technically equivalent to those described.

## Claims

1. A method for thermoforming first and second continuous strips (53) of heat sealable and thermoformable material to produce containers,the method comprising the steps of heating, sealing and inflating facing parts of said strips (53) to obtain at a first inflation station (51) inflated pockets (65) bounded by seals (67), characterized in that the inflated pockets (65) are advanced to a second inflation station (52) where they are subjected to a further inflating process expanding said pockets by inflating fluid supplied by injectors (74; 76) to conduits (75) formed between said facing parts so as to extend from the first inflation station (51) to the second inflation station (52).

2. A method according to claim 1, wherein the said injectors (74) are directed in the direction of advance of the strips (53).

3. A method according to claim 1, wherein said injectors (76) are directed in a transverse direction with respect to the direction of advance of the strips (53).

4. A method according to any preceding claim, wherein said conduits (75) by-pass inflated pockets (65) at said first inflation station (51).

5. Apparatus for thermoforming first and second continuous strips (53) of heat sealable and thermoformable material to produce containers, the apparatus comprising advancing means (55) for advancing said strips (53), heating, sealing and inflating means (51, 56) for heating, sealing and inflating facing parts of said sheets (53) to obtain, at a first inflation station (51) comprising first and second complementary die means (64) having respective complementary impressions (65) therein, inflated pockets (65) bounded by seals (67), characterized in that a second inflation station (52) is situated after said first inflation station (51) and comprises third and fourth complementary die means (68, 70, 81) having respective complementary impressions (69) therein, and in that at least one longitudinal inside groove (66) extends along said die means (64, 68; 64, 68, 70, 81) from said first and second complementary die means (64) to at least one of the impressions (69) in said third and fourth complementary die means (68, 70, 81), the edges of said at least one groove (66) and of said at least one of the impressions (69) having heat-sealing surfaces.

6. Apparatus according to claim 5, wherein the upstream end of the said at least one groove (66) is connected to a corresponding inflating fluid injector (74; 76).

7. Apparatus according to claim 6, wherein the or each injector (74) extends in the direction from said first inflation station (51) towards said second inflation station (52).

8. Apparatus according to claim 6, wherein the or each injector (74) extends transversely to the direction from said first inflation station (51) towards said second inflation station (52).

9. Apparatus according to any one of claims 5 to 8, wherein said at least one groove (66) bypasses said impressions (65) in said first and second complementary die means (64).

10. Apparatus according to any one of claims 5 to 9, wherein each of said third and fourth die means (68, 70, 81) comprises a removable element (70) for forming of half of an indentation (5) at the base of a container (1; 10; 13; 19).

11. Apparatus according to any one of claims 5 to 10, wherein each of said third and fourth die means (68, 70, 81) comprises at least one pair of removable longitudinal inserts (81) for forming lateral indentations (20) halves of the container (19).

## Patentansprüche

1. Verfahren zum Thermo-Verformen eines ersten und eines zweiten ununterbrochenen Streifens (53) aus einem durch Hitze verschmelzbaren und durch Wärme verformbaren Material, um Behälter herzustellen, wobei das Verfahren die Schritte Erhitzen, Verschmelzen und Aufblasen einander gegenüberliegender Teile der Streifen (53) umfaßt, um an einer ersten Aufblase-Station (51) aufgeblasene Taschen (65) zu erhalten, die durch Verschmelzungen (67) begrenzt sind, dadurch gekennzeichnet, daß die aufgeblasenen Taschen (65) zu einer zweiten Aufblase-Station (52) gebracht werden, wo sie einer weiteren Aufblase-Behandlung unterzogen werden, bei der die Taschen durch das Einblasen eines Fluids gedehnt werden, das von Einspritzdüsen (74; 76) an Leitungen (75) geliefert wird, die zwischen den einander gegenüberliegenden Teilen gebildet sind, um sich von der ersten Aufblase-Station (51) zu der zweiten Aufblase-Station (52) zu erstrecken.

2. Verfahren nach Anspruch 1, wobei die Einspritzdüsen (74) in die Richtung des Vorschubs der Streifen (53) gerichtet sind.

3. Verfahren nach Anspruch 1, wobei die Einspritzdüsen (76) in eine Richtung gerichtet sind, die der Vorschubrichtung der Streifen (53) entgegengesetzt ist.

4. Verfahren nach einem der vorhergehenden Ansprüche, wobei die Leitungen (75) aufgeblasene Taschen (65) an der ersten Aufblase-Station (51) überbrücken.

5. Vorrichtung zum Thermo-Verformen eines ersten und eines zweiten ununterbrochenen Streifens (53) aus einem durch Hitze verschmelzbaren und durch Wärme verformbaren Material, um Behälter herzustellen, wobei die Vorrichtung Vorschubmittel (55) zum Vorschieben der Streifen (53) umfaßt, sowie Erhitzungs-, Verschmelzungs- und Aufblasmittel (51, 56) zum Erhitzen, Verschmelzen und Aufblasen einander gegenüberliegender Teile der Streifen (53), um durch Verschmelzungen (67) begrenzte aufgeblasene Taschen (65) an einer ersten Aufblase-Station (51) zu erhalten, die ein erstes und ein zweites komplementäres Formmittel (64) mit entsprechend komplementären Eindrücken (65) umfaßt, dadurch gekennzeichnet, daß eine zweite Aufblase-Station (52) nach der ersten Aufblase-Station (51) plaziert ist und ein drittes und ein viertes komplementäres Formmittel (68, 70, 81) mit entsprechend komplementären Eindrücken (69) umfaßt, und daß zumindest eine längsverlaufende innenliegende Nut (66) sich längs der Formmittel (64, 68; 64, 68, 70, 81) von dem ersten und dem zweiten komplementären Formmittel (64) zu zumindest einem der Eindrücke (69) in dem dritten und dem vierten komplementären Formmittel (68, 70, 81) erstreckt, wobei die Kanten der zumindest einen Nut (66) und des zumindest einen Eindrucks der Eindrücke (69) Oberflächen zum Hitzeverschmelzen besitzen.

6. Vorrichtung nach Anspruch 5, wobei das stromaufwärtige Ende der zumindest einen Nut (66) mit einer entsprechenden ein Fluid einblasenden Einspritzdüse (74; 76) verbunden ist.

7. Vorrichtung nach Anspruch 6, wobei sich die oder jede Einspritzdüse (74) von der ersten Aufblase-Station (51) in Richtung der zweiten Aufblase-Station (52) erstreckt.

8. Vorrichtung nach Anspruch 6, wobei die oder jede Einspritzdüse (74) sich quer zu der Richtung von der ersten Aufblase-Station (51) zu der zweiten Aufblase-Station (52) erstreckt.

9. Vorrichtung nach einem der Ansprüche 5 bis 8, wobei die zumindest eine Nut (66) die Eindrücke (65) in dem ersten und dem zweiten komplementären Formmittel (64) überbrückt.

10. Vorrichtung nach einem der Ansprüche 5 bis 9, wobei das dritte und das vierte Formmittel (68, 70, 81) jeweils ein entfernbares Element (70) umfassen, um an der Basis eines Behälters (1; 10; 13; 19) eine Hälfte einer Einbuchtung (5) auszubilden.

11. Vorrichtung nach einem der Ansprüche 5 bis 10, wobei das dritte und das vierte Formmittel (68, 70, 81) jeweils zumindest ein Paar entfernbarer länglicher Einsätze (81) umfaßt, um seitliche Einbuchtungshälften (20) des Behälters (19) zu bilden.

## Revendications

1. Procédé de thermoformage d'une première et d'une seconde bandes continues (53) de matériau thermosoudable et thermoformable pour produire des récipients, le procédé comprenant les étapes consistant à chauffer, souder et gonfler des parties en vis-à-vis desdites bandes (53) pour obtenir dans un premier poste de gonflage (51) des poches gonflées (65) délimitées par des soudures (67), ***caractérisé en ce que*** les poches gonflées (65) sont avancées jusqu'à un second poste de gonflage (52) où elles sont soumises à une nouvelle opération de gonflage en dilatant lesdites poches avec un fluide de gonflage alimenté par des injecteurs (74 ; 76) dans des conduits (75) formés entre lesdites parties en vis-à-vis de manière à s'étendre du premier poste de gonflage (51) au second poste de gonflage (52).

2. Procédé selon la Revendication 1, dans lequel lesdits injecteurs (74) sont orientés dans la direction de défilement des bandes (53).

3. Procédé selon la Revendication 1, dans lequel lesdits injecteurs (76) sont orientés dans un sens transversal par rapport à la direction de défilement des bandes (53).

4. Procédé selon l'une quelconque des Revendications précédentes, dans lequel lesdits conduits (75) évitent les poches gonflées (65) au niveau dudit premier poste de gonflage (51).

5. Dispositif de thermoformage d'une première et d'une seconde bandes continues (53) de matériau thermosoudable et thermoformable pour produire des récipients, le dispositif comprenant des moyens d'avancée (55) pour faire avancer lesdites bandes (53). des moyens de chauffage. soudage et gonflage (51, 56) pour chauffer, souder et gonfler des parties en vis-à-vis desdites feuilles (53) afin d'obtenir, dans un premier poste de gonflage (51) comprenant des premier et second moyens de matrice complémentaires (64) offrant des empreintes respectives complémentaires (65), des poches gonflées (65) délimitées par des soudures (67), ***caractérisé en ce qu'***un second poste de gonflage (52) est situé après ledit premier poste de gonflage (51) et comprend des troisième et quatrième moyens de matrice complémentaires (68, 70, 81) offrant des empreintes respectives complémentaires (69), et ***en ce qu'***au moins une gorge intérieure longitudinale (66) s'étend le long desdits moyens de matrice (64, 68; 64. 68, 70, 81) depuis lesdits premier et second moyens de matrice complémentaires (64) jusqu'à au moins une des empreintes (69) dans lesdits troisième et quatrième moyens de matrice complémentaires (68. 70, 81), les bords de ladite au moins une gorge (66) et de ladite au moins une des empreintes (69) ayant des surfaces thermosoudables.

6. Dispositif selon la Revendication 5, dans lequel l'extrémité amont de ladite au moins une gorge (66) est raccordée à un injecteur de fluide de gonflage correspondant (74 ; 76).

7. Dispositif selon la Revendication 6, dans lequel le ou chaque injecteur (74) s'étend dans la direction allant dudit premier poste de gonflage (51) vers ledit second poste de gonflage (52).

8. Dispositif selon la Revendication 6, dans lequel le ou chaque injecteur (74) s'étend transversalement à la direction allant dudit premier poste de gonflage (51) vers ledit second poste de gonflage (52).

9. Dispositif selon l'une quelconque des Revendications 5 à 8, dans lequel ladite au moins une gorge (65) évite lesdites empreintes (65) dans lesdits premier et second moyens de matrice complémentaires (64).

10. Dispositif selon l'une quelconque des Revendications 5 à 9, dans lequel chacun desdits troisième et quatrième moyens de matrice (68, 70, 81) comprend un élément amovible (70) pour le formage d'une moitié d'un renfoncement (5) à la base d'un récipient (1 ; 10 ; 13 ; 19).

11. Dispositif selon l'une quelconque des Revendications 5 à 10, dans lequel chacun desdits troisième et quatrième moyens de matrice (68, 70, 81) comprend au moins une paire d'inserts longitudinaux amovibles (81) pour la formation de demis renfoncements latéraux (20) sur le récipient (19).
